(19) **Europäisches Patentamt**
**European Patent Office**
**Office européen des brevets**

(11) **EP 4 490 998 A1**

(12) **EUROPÄISCHE PATENTANMELDUNG**

(43) Veröffentlichungstag:
**15.01.2025 Patentblatt 2025/03**

(21) Anmeldenummer: **24187222.5**

(22) Anmeldetag: **08.07.2024**

(51) Internationale Patentklassifikation (IPC):
$A01B\ 69/04^{(2006.01)}$ $G05D\ 1/00^{(2024.01)}$
$G05D\ 1/43^{(2024.01)}$ $G05D\ 1/644^{(2024.01)}$
$G05D\ 1/648^{(2024.01)}$ $G05D\ 105/15^{(2024.01)}$

(52) Gemeinsame Patentklassifikation (CPC):
**A01B 69/008; G05D 1/00; G05D 1/43; G05D 1/644; G05D 1/648;** G05D 2105/15

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **14.07.2023 DE 102023118715**

(71) Anmelder:
• **KRONE Agriculture SE**
**48480 Spelle (DE)**
• **Lemken GmbH & Co KG**
**46519 Alpen (DE)**

(72) Erfinder:
• **Grever, Alexander**
**49078 Osnabrück (DE)**
• **Lömker, Jens**
**48496 Hopsten (DE)**
• **Mählmann-Dunker, Hannes**
**27251 Neuenkirchen (DE)**
• **Beulting, Hubert**
**48477 Hörstel (DE)**

(74) Vertreter: **Engelmann, Kristiana et al**
**Busse & Busse, Patentanwälte**
**Grosshandelsring 6**
**49084 Osnabrück (DE)**

(54) **VERFAHREN ZUR FAHRROUTENOPTIMIERUNG**

(57) Die Erfindung betrifft ein Verfahren zur Fahrroutenoptimierung für eine Feldbearbeitung, bei welcher ein vorgegebener Bearbeitungsbereich (20, 21, 22) von einer Landmaschine (10) entsprechend einer Fahrroute ($F_1$-$F_3$) durchfahren wird, wobei der Bearbeitungsbereich (20, 21, 22) wenigstens einen Eckbereich (26) aufweist mit einer zumindest eckenartigen Randstruktur (25). Um eine effiziente und dabei möglichst vollständige Bearbeitung eines polygonal berandeten Bearbeitungsbereichs zu erleichtern, ist erfindungsgemäß vorgesehen, dass:

- eine automatische Optimierung der Fahrroute durchgeführt wird (S110), indem aus einer Mehrzahl möglicher Fahrrouten ($F_1$-$F_3$) eine entsprechend einem Optimierungskriterium optimale Fahrroute ($F_{opt}$) ermittelt wird, wobei das Optimierungskriterium wenigstens teilweise auf einer Minimierung einer unbearbeiteten Fläche basiert, und

- automatisch Steuerdaten (D) zur Steuerung der Landmaschine (10) während der Feldbearbeitung erzeugt werden (S170), welche Steuerdaten (D) die optimale Fahrroute ($F_{opt}$) repräsentieren.

Fig.3

**Beschreibung**

Die vorliegende Erfindung betrifft ein Verfahren zur Fahrroutenoptimierung nach dem Oberbegriff von Anspruch 1, ein Computersystem zur Fahrroutenoptimierung nach dem Oberbegriff von Anspruch 15, eine Landmaschine nach dem Oberbegriff von Anspruch 16 sowie ein Computerprogrammprodukt nach Anspruch 17.

Bei der Bearbeitung einer landwirtschaftlichen Nutzfläche, zum Beispiel eines gegebenen Bearbeitungsbereichs, fährt eine Landmaschine die Fläche entsprechend einer Fahrroute ab. Zum Beispiel kann ein Innenbereich in mehreren Fahrspuren nach und nach abgefahren werden, während zum Wechsel zwischen den parallelen Fahrspuren Wendewege notwendig sind, die in einem Vorgewende durchfahren werden, welches randseitig des Innenbereichs angeordnet ist. Das Vorgewende wird bearbeitet, bevor der Innenbereich bearbeitet wird. Dabei ist eine möglichst vollständige Bearbeitung sowohl des Innenbereichs als auch des Vorgewendes wünschenswert, um so den Ertrag zu maximieren. Andererseits soll sich die Landmaschine auch nicht außerhalb des vorgesehenen Bearbeitungsbereichs bewegen oder zumindest keine Bearbeitung außerhalb desselben durchführen. Das heißt, die Bearbeitung soll sich möglichst genau an den vorgegebenen Grenzen des Bearbeitungsbereichs orientieren. Da Flurstücke in aller Regel eine polygonale, zum Beispiel rechteckige Form aufweisen, weist die Berandung des Bearbeitungsbereichs in der Realität nahezu immer Ecken auf, die hinsichtlich der Bearbeitung eine besondere Herausforderung darstellen. Das jeweilige Bearbeitungsorgan, zum Beispiel ein Mähbalken, ein Maisgebiss, ein Pflug, eine Sprühvorrichtung etc., kann aufgrund der begrenzten Manövrierbarkeit der Landmaschine nur entsprechend einem bestimmten minimalen Arbeitsradius geführt werden. Daher kann eine annähernd vollständige Bearbeitung des Eckbereichs nicht durch eine einfache Kurvenfahrt erreicht werden. Stattdessen ist ein Rangieren mit mehrfachen Wechseln zwischen Vorwärts- und Rückwärtsfahrt notwendig. Derartige Manöver stellen allerdings erhöhte Anforderungen an den Fahrer und führen zu einer längeren Fahrstrecke und Fahrzeit. Es besteht somit ein Konflikt zwischen einer möglichst vollständigen Bearbeitung einerseits und anderen Zielen wie beispielsweise Zeitersparnis.

Aufgabe der Erfindung ist es, eine effiziente und dabei möglichst vollständige Bearbeitung eines polygonal berandeten Bearbeitungsbereichs zu erleichtern.

Die Aufgabe wird gelöst mit einem Verfahren mit den Merkmalen des unabhängigen Patentanspruchs 1. Vorteilhafte Ausführungsformen sind den abhängigen Ansprüchen entnehmbar.

Dafür wird ein Verfahren geschaffen zur Fahrroutenoptimierung für eine Feldbearbeitung, bei welcher ein vorgegebener Bearbeitungsbereich von einer Landmaschine entsprechend einer Fahrroute durchfahren wird, wobei der Bearbeitungsbereich wenigstens einen Eckbereich aufweist mit einer zumindest eckenartigen Randstruktur, wobei

- eine automatische Optimierung der Fahrroute durchgeführt wird, indem aus einer Mehrzahl möglicher Fahrrouten eine entsprechend einem Optimierungskriterium optimale Fahrroute ermittelt wird, wobei das Optimierungskriterium wenigstens teilweise auf einer Minimierung einer unbearbeiteten Fläche basiert, und
- automatisch Steuerdaten zur Steuerung der Landmaschine während der Feldbearbeitung erzeugt werden, welche Steuerdaten die optimale Fahrroute repräsentieren.

Das Verfahren ist zur Fahrroutenoptimierung bei einer Feldbearbeitung vorgesehen. Die Feldbearbeitung wird durch eine Landmaschine ausgeführt. Die Landmaschine kann auch als landwirtschaftliche Arbeitsmaschine bezeichnet werden. Dies schließt ausdrücklich auch Gespanne ein, mit einem Schlepper und wenigstens einer hiervon gezogenen oder getragenen Maschine wie beispielsweise einem Anhänger. Die Landmaschine kann insbesondere eine Erntemaschine wie ein Feldhäcksler, ein Mähdrescher, eine Ballenpresse oder ein Ladewagen sein. Es könnte sich aber auch zum Beispiel um einen Traktor mit einem Zetter, einem Pflug, einem Düngerstreuer, einem Güllefass oder dergleichen handeln.

Im Rahmen der Feldbearbeitung durchfährt die Landmaschine entsprechend einer Fahrroute einen Bearbeitungsbereich, zum Beispiel einen Acker, ein Feld oder einen Teil desselben, wobei zur Vereinfachung die Begriffe "Feld" und "Acker" gleichbedeutend verwendet werden. In vielen Fällen kann ein Feld in einen Innenbereich und ein Vorgewende unterteilt werden. Der Bearbeitungsbereich kann in einem solchen Fall insbesondere das Vorgewende sein oder zumindest dieses umfassen. In diesem Bearbeitungsbereich erfolgt die Feldbearbeitung, zum Beispiel Pflügen, Düngen, Mähen, Zetten, Erntegutaufnahme oder dergleichen, was nicht zwangsläufig bedeutet, dass der gesamte Bearbeitungsbereich bearbeitet wird, wenngleich dies wünschenswert ist.

Der Bearbeitungsbereich weist wenigstens einen Eckbereich auf, mit einer zumindest eckenartigen Randstruktur. Die Randstruktur kann auch als Ecke bezeichnet werden, wobei der durch die Randstruktur gebildete Winkel vom Bearbeitungsbereich kleiner als 180° sein kann (zum Beispiel 90°), aber auch größer als 180°, zum Beispiel 270°. Es versteht sich, dass die Randstruktur keine "Ecke" im mathematischen Sinn ist. Man kann sagen, dass dort ein plötzlicher Richtungswechsel der Berandung erfolgt, normalerweise auf einer Strecke, die deutlich kleiner ist als die Länge der Landmaschine. Insbesondere kann die Randstruktur einen Krümmungsradius aufweisen, welcher kleiner ist als ein minimaler Arbeitsradius, entsprechend welchem ein Bearbeitungsorgan der Landmaschine bei einer Kurvenfahrt führbar ist. Das Bearbeitungsorgan ist derjenige Teil, welcher die eigentliche Bearbeitung durchführt, zum Beispiel ein Mähbalken, ein Maisgebiss, ein Pflug, eine Egge, eine Sprühvorrichtung oder dergleichen. Da die Landmaschine einen minimalen Kurvenradius benötigt, kann auch das Bearbeitungsorgan, genauer gesagt ein Randbereich desselben, nur entlang eines Kreisbogens mit einem notwendigen minimalen Radius geführt werden, welcher hier als minimaler Arbeitsradius bezeichnet wird. Es versteht sich, dass dabei unterschieden werden muss, ob der entsprechende Randbereich des Bearbeitungsorgans auf der kurveninneren Seite oder der kurvenäußeren Seite der Landmaschine angeordnet ist. In jedem Fall kann die Landmaschine den Eckbereich mit einer einfachen Kurvenfahrt nicht vollständig bearbeiten, wenn die eckenartige Randstruktur wenigstens teilweise einen Krümmungsradius aufweist, der kleiner ist als der minimale Arbeitsradius. Der Eckbereich ist bereichsweise durch die eckenartige Randstruktur begrenzt, wobei er insgesamt ein mehr oder weniger großes Umfeld der genannten Randstruktur umfassen kann. Wie groß ein einzelner Eckbereich ist, kann im Rahmen des erfindungsgemäßen Verfahrens fest definiert sein oder es kann fallweise flexibel festgelegt werden.

Das Verfahren weist die nachfolgend genannten Schritte auf, wobei diese ausdrücklich nicht zwangsläufig in der genannten Reihenfolge ausgeführt werden müssen. Die zeitliche Abfolge zweier Schritte kann gegenüber der Reihenfolge ihrer Nennung umgekehrt sein. Ebenso ist es möglich, dass zwei Schritte ganz oder teilweise zeitlich parallel ausgeführt werden.

In einem Verfahrensschritt wird eine automatische Optimierung der Fahrroute durchgeführt, indem aus einer Mehrzahl möglicher Fahrrouten eine entsprechend einem Optimierungskriterium optimale Fahrroute ermittelt wird, wobei das Optimierungskriterium wenigstens teilweise auf einer Minimierung einer unbearbeiteten Fläche basiert. Das heißt, es wird eine Mehrzahl von möglichen Fahrrouten betrachtet, die gewissermaßen Kandidaten für eine optimale Fahrroute darstellen, und es wird anhand eines Optimierungskriteriums zur Fahrroutenoptimierung untersucht, welche dieser Fahrrouten optimal ist. Der Begriff "optimale Fahrroute" ist so zu verstehen, dass dies die beste Fahrroute ist, die entsprechend dem Optimierungskriterium aufgefunden wurde. Unter Umständen könnte tatsächlich eine bessere Fahrroute existieren, die allerdings nicht aufgefunden wurde, beispielsweise weil nicht genügend unterschiedliche Fahrrouten untersucht wurden. Die Optimierung erfolgt automatisch, also maschinell, das heißt computergestützt. Soweit hier und im Folgenden der Begriff "automatisch" verwendet wird, schließt dies insbesondere die Möglichkeit ein, dass die entsprechenden Vorgänge ganz oder teilweise durch Software durchgeführt werden, die auf einer geeigneten Hardware implementiert ist. Dieser Schritt sowie weitere Schritte des Verfahrens können zum Beispiel durch ein Farm-Management-Informationssystem (FMIS) durchgeführt werden. Das Optimierungskriterium basiert wenigstens teilweise auf einer Minimierung der unbearbeiteten Fläche. Bevorzugt bezieht sich dies auf den gesamten Bearbeitungsbereich, es könnte allerdings auch nur die unbearbeitete Fläche in einem Teilbereich betrachtet werden. Die Minimierung der unbearbeiteten Fläche ist, sofern eine Gesamtfläche des Bearbeitungsbereichs oder Teilbereichs definiert ist, gleichbedeutend mit einer Maximierung der bearbeiteten Fläche. Wie im Weiteren noch erläutert wird, ist es bevorzugt, dass das Optimierungskriterium nicht vollständig, sondern nur teilweise auf der Minimierung der unbearbeiteten Fläche basiert, so dass zudem wenigstens ein weiteres Kriterium berücksichtigt werden kann.

In einem weiteren Verfahrensschritt werden automatisch Steuerdaten zur Steuerung der Landmaschine während der Feldbearbeitung erzeugt, welche Steuerdaten die Fahrroute repräsentieren. Die Steuerdaten enthalten in jedem Fall die Informationen, die zum Steuern der Landmaschine entlang der Fahrroute notwendig sind. Bei der Feldbearbeitung kann die Landmaschine entsprechend der Steuerdaten gesteuert werden. Der Begriff "steuern" bezieht sich hier allgemein auf jede gezielte Beeinflussung von Ausrichtung und/oder Bewegungszustand der Landmaschine, also zum Beispiel Lenken, Beschleunigen, Abbremsen etc. Optional können sich die Steuerdaten auch teilweise auf andere Funktionen der Landmaschine beziehen, zum Beispiel eine Steuerung eines Hubwerks. Jedenfalls kann die Landmaschine anhand der Steuerdaten so gesteuert werden, dass sie idealerweise der ermittelten Fahrroute folgt. Das Format der Steuerdaten sowie deren Inhalt können unterschiedlich gewählt werden, insbesondere in Abhängigkeit von der jeweiligen Landmaschine sowie gegebenenfalls weiteren zur Umsetzung des Verfahrens eingesetzten Komponenten. Insbesondere kann die Fahrroute durch eine mehr oder weniger dichte Folge von Wegpunkten repräsentiert sein. Es können auch explizite Lenkanweisungen in den Steuerdaten enthalten sein, oder lediglich Positionsangaben für Wegpunkte, wobei auf Seiten der Landmaschine die passenden Lenkparameter ermittelt werden, um von einem Wegpunkt zum nächsten zu gelangen.

Die Erfindung ermöglicht eine effiziente Feldbearbeitung, da eine automatische Optimierung vorgenommen wird, bei der unterschiedliche Fahrrouten in Betracht gezogen werden und aus diesen eine gemäß dem definierten Optimierungskriterium beste Fahrroute ausgewählt wird. Dabei wird - zumindest anteilig - die angestrebte möglichst vollständige Bearbeitung berücksichtigt. Die Optimierung wird automatisch durchgeführt, was einem Benutzer, zum Beispiel einem Fahrer, komplexe Überlegungen erspart und zugleich menschliche Fehler ausschließt. Auf Basis der gefundenen optimale Fahrroute werden automatisch Steuerdaten erstellt, die entweder einen Fahrer beim Abfahren der Fahrroute anleiten oder eventuell auch eine automatische Steuerung der Landmaschine entsprechend der Fahrroute möglichen.

Bevorzugt basiert das Optimierungskriterium wenigstens teilweise auf einer Optimierung eines Optimierungswerts, der durch Aufsummieren von Beiträgen einzelner Routenabschnitte einer Fahrroute ermittelt wird. Der Optimierungswert kann in vielen Fällen auch als Aufwandswert oder Kostenwert bezeichnet werden, wobei die Optimierung des Optimierungswerts dann in einer Minimierung liegt. Es wäre allerdings auch denkbar, dass, je nach Art oder Definition des Optimierungswerts, die Optimierung in einer Maximierung desselben liegt. Im einfachsten Fall besteht das Optimierungskriterium in einer Minimierung (oder Maximierung) des Optimierungswerts. Das heißt diejenige Fahrroute ist optimal, die den Optimierungswert optimiert. Wie nachfolgend noch erläutert wird, könnten aber auch andere Größen, zum Beispiel weitere Optimierungswerte, berücksichtigt werden, so dass die Optimierung des einen Optimierungswerts mit anderen Zielsetzungen konkurriert. In jedem Fall wird der Optimierungswert ermittelt, indem Beiträge einzelner Routenabschnitte einer Fahrroute aufsummiert werden. Der Optimierungswert W lässt sich wie folgt berechnen:

$$W = \sum_j W_j$$

wobei $W_j$ den Beitrag des j-ten Routenabschnitts darstellt und die Summe über j über alle Routenabschnitte läuft.

Bei jeder automatischen Optimierung können unterschiedliche Verfahren zur Auffindung der optimalen Lösung oder zur Suche nach der optimalen Lösung eingesetzt werden, insbesondere metaheuristische Verfahren wie Simulated Annealing oder genetische bzw. evolutionäre Algorithmen.

Besonders bevorzugt wird jede Fahrroute durch Kombination aufeinander folgender Bewegungselemente ermittelt, wobei jedes Bewegungselement aus einer Mehrzahl vordefinierter Basiselemente ausgewählt wird. Das heißt, die Fahrroute wird ermittelt, indem Bewegungselemente (die man auch als Routenelemente bezeichnen kann) derart kombiniert werden, dass sie aufeinander folgen. Die Bewegungselemente werden also aneinandergereiht. Man kann dies als sowohl zeitliche als auch räumliche Aneinanderreihung sehen. Es sind eine Mehrzahl (unter Umständen eine Vielzahl) von Basiselementen vordefiniert, von denen jedes eine Bewegung der Landmaschine repräsentiert. Wenn die Basiselemente hier als "vordefiniert" bezeichnet werden, bedeutet dies nicht zwangsläufig, dass das Basiselement in all seinen Eigenschaften vordefiniert ist. Wenn ein Basiselement beispielsweise eine Kurvenfahrt repräsentiert, könnte zwar der Kurvenradius vorgegeben sein, aber beispielsweise die Länge der Kurvenfahrt, die Geschwindigkeit der Landmaschine, die anfängliche Ausrichtung der Landmaschine oder andere Parameter unterschiedlich wählbar sein. In jedem Fall wird jeweils ein Bewegungselement aus den Basiselementen ausgewählt, dies wird für das nachfolgende Bewegungselement wiederholt, dann für das übernächste usw. Es versteht sich, dass unter Umständen ein und dasselbe Basiselement mehrfach ausgewählt werden kann. Insgesamt stellt sich die Routenplanung somit als kombinatorisches Problem dar, bei welchem unterschiedliche Kombinationen von Basiselementen im Hinblick auf das Optimierungskriterium miteinander verglichen werden.

Wenngleich die Reduzierung der Routenplanung auf ein kombinatorisches Problem eine systematische Suche nach der optimalen Fahrroute ermöglicht, kann dies zu einem unter Umständen hohen Rechenaufwand führen, der je nach vorhandener Rechenkapazität problematisch sein könnte. Dieses Problem kann dadurch gemildert werden, dass unterschieden wird, in welchen Teilen des Bearbeitungsbereichs eine besonders genaue Planung notwendig ist und in welchen Bereichen auf einer größeren Skala geplant werden kann, da bestimmte Eigenschaften der optimalen Fahrroute dort offensichtlich sind. Beispielsweise kann vorausgesetzt werden, dass benachbart zu einer längeren geraden Kante des Bearbeitungsbereichs eine gerade Fahrspur oder mehrere zueinander parallele, gerade Fahrspuren für die optimale Fahrroute verwendet werden können. Das heißt, es ist unnötig, in diesem Bereich zu untersuchen, ob beispielsweise zwischendurch erfolgende Kurvenfahrten zu einer verbesserten Lösung führen würden. Es können also dort vergleichsweise große und/oder streckenmäßig lange Bewegungselemente eingeplant werden. Andererseits ist in einem Eckbereich eine sorgfältige Untersuchung unterschiedliche Kombinationen von relativ kleinen, das heißt streckenmäßig kurzen, Bewegungselementen sinnvoll, da dort die optimale (Teil-) Lösung nicht offensichtlich ist. Es ist daher bevorzugt, dass in dem wenigstens einen Eckbereich Bewegungselemente mit kürzerer Fahrstrecke verwendet werden als außerhalb eines Eckbereichs. Die kürzere Fahrstrecke entspricht dabei im Allgemeinen auch einer kürzeren Fahrzeit, das heißt es wird innerhalb des jeweiligen Eckbereichs auf einer kürzeren Zeitskala geplant. Beispielsweise könnten für den Eckbereich Bewegungselemente mit einer Fahrstrecke von maximal 5 m, maximal 2 m oder maximal 1 m verwendet werden, während außerhalb des Eckbereichs Bewegungselemente mit einer Fahrstrecke von über 5 m oder über 10 m verwendet werden. Soweit die Basiselemente hinsichtlich ihrer Länge vordefiniert sind, kann man auch sagen, dass für den Eckbereich Basiselemente mit kürzerer Fahrstrecke ausgewählt werden als außerhalb des Eckbereichs.

Vorteilhaft ist jedes Bewegungselement durch wenigstens einen Betriebsparameter charakterisiert, wobei wenigstens ein Betriebsparameter eine Fahrtrichtung, eine Fahrgeschwindigkeit, ein Lenkwinkel und/oder ein Aktivierungszustand eines Bearbeitungsorgans ist. Hier und im Folgenden bezieht sich der Begriff "Fahrtrichtung" nicht auf eine Himmelsrichtung, entlang der sich die Landmaschine bewegt, sondern darauf, ob die Landmaschine vorwärts oder rückwärts fährt. Die Fahrgeschwindigkeit bezeichnet selbstverständlich die Geschwindigkeit, mit der sich die Landmaschine bewegt, wobei für Rückwärtsfahrt negative Geschwindigkeiten definiert sein können. Der Lenkwinkel bezeichnet den Einschlag des oder der lenkbaren Räder gegenüber der Geradeausfahrt. Der Aktivierungszustand des Bearbeitungsorgans bezeichnet, ob das Bearbeitungsorgan eine Bearbeitung durchführt oder nicht, also beispielsweise, ob ein Mähwerk in Betrieb ist, ob ein Pflug zur Bodenbearbeitung abgesenkt ist oder dergleichen. Die an sich kontinuierlichen Betriebsparameter wie Fahrgeschwindigkeit und Lenkwinkel können dabei im Rahmen der Planung diskretisiert werden, beispielsweise derart, dass die Fahrgeschwindigkeit nur in Schritten von 2 km/h definiert wird und der Lenkwinkel nur in Schritten von 5°.

Innerhalb eines Bewegungselements können die Betriebsparameter konstant sein. Dies ist insbesondere für Bewegungselemente sinnvoll, die einer kurzen Fahrstrecke entsprechen, so dass für die Zwecke der Planung der Fahrroute angenommen werden kann, dass sich die Betriebsparameter nicht ändern. Eine entsprechende Ausführungsform sieht vor, dass wenigstens in einem Teil der Fahrroute Bewegungselemente kombiniert werden, innerhalb derer der wenigstens eine Betriebsparameter jeweils konstant ist, wobei sich wenigstens ein Betriebsparameter von einem Bewegungselement zum nächsten Bewegungselement ändert. Das heißt für jedes Bewegungselement wird zum Beispiel eine konstante Fahrtrichtung (also vorwärts oder rückwärts), konstante Fahrtgeschwindigkeit, konstanter Lenkwinkel etc. angenommen. Dass sich im Allgemeinen die Betriebsparameter ändern, wird bei dieser Ausführungsform dadurch berücksichtigt, dass diese für aufeinanderfolgende Bewegungselemente unterschiedlich sein können. zum Beispiel kann ein Bewegungselement eine Geschwindigkeit von 10 km/h aufweisen, während das nächste Bewegungselement eine Geschwindigkeit von 12 km/h aufweist.

Es ist aber auch möglich, dass sich wenigstens ein Betriebsparameter innerhalb wenigstens eines Bewegungselements ändert. Das heißt es könnte innerhalb eines Bewegungselements eine Beschleunigung erfolgen, eine Änderung des Lenkwinkels, eine Fahrtrichtungsumkehr etc. Hierdurch verkompliziert sich i.Allg. die Struktur des einzelnen Bewegungselements und es sind möglicherweise eine größere Anzahl unterschiedlicher Basiselemente notwendig, was sich auf den erforderlichen Speicherplatz auswirken kann. Andererseits reduziert sich die Anzahl von Bewegungselementen innerhalb der Fahrroute, was den Rechenaufwand verringern kann.

Es sind auch Mischformen denkbar, wobei beispielsweise die Fahrtrichtung innerhalb eines Bewegungselements gleichbleibt und sich nur zwischen zwei Bewegungselementen ändern kann, während die Geschwindigkeit auch innerhalb eines Bewegungselements Veränderungen unterliegen kann.

Da eine vollständige Bearbeitung eines Eckbereichs nur auf diese Weise möglich ist, beinhaltet wenigstens eine Fahrroute eine Fahrtrichtungsumkehr zwischen Vorwärtsfahrt und Rückwärtsfahrt. Durch eine Fahrtrichtungsumkehr kann u.a. erreicht werden, dass die Landmaschine eine Fahrspur mehrfach in unterschiedlicher Fahrtrichtung befahren kann, also zum Beispiel gerade vorwärts fährt und dann gerade zurücksetzt, bevor sie in einer Kurve wieder vorwärts fährt. Eine Fahrtrichtungsumkehr kann einerseits durch Aneinanderfügen von Bewegungselementen mit unterschiedlicher Fahrtrichtung realisiert werden. Andererseits kann dies dadurch erreicht werden, dass wenigstens ein Bewegungselement wenigstens eine Fahrtrichtungsumkehr zwischen Vorwärts- und Rückwärtsfahrt beinhaltet.

Eine Ausgestaltung sieht vor, dass für wenigstens einen Teil der Fahrroute ein Anfangspunkt und ein Endpunkt definiert werden, welche die Fahrroute enthalten muss. Das heißt die Fahrroute kann nicht beliebig verlaufen, sondern muss diesen Anfangs- und Endpunkt enthalten. Sofern sich dies auf die Fahrroute insgesamt bezieht, erfolgt die Definition typischerweise benutzerseitig. So kann der Benutzer bestimmen, dass die Fahrroute beispielsweise am Außenrand eines Vorgewendes beginnen soll und am Innenrand des Vorgewendes enden soll, zum Beispiel an einem Ende des Innenbereichs, von dem aus dann die Bearbeitung mit parallelen Fahrspuren durchgeführt werden soll. Es wäre aber auch denkbar, dass automatisch innerhalb der Fahrroute ein "lokaler" Anfangs- und Endpunkt für eine Teilstrecke definiert werden, so dass dann eine eigene Optimierung für den Weg zwischen diesen Punkten durchgeführt wird. Eine derartige automatische Definition kann für einen Teil der geplanten Fahrrouten vorgenommen werden, das heißt es wird eine Gruppe von Fahrrouten getestet, die die genannten Punkte enthalten.

Die Fahrroute wird bevorzugt im Hinblick auf die tatsächlichen Eigenschaften derjenigen Landmaschine geplant, die die Feldbearbeitung ausführen soll. Genauer gesagt, es ist bevorzugt, dass die Fahrroute unter Berücksichtigung von Fahreigenschaften der ausführenden Landmaschine ermittelt wird. Die Fahreigenschaften können eine mögliche Höchstgeschwindigkeit (gegebenenfalls nach Vorwärts- und Rückwärtsfahrt zu unterscheiden), einen minimalen Kurvenradius, einen maximalen Lenkwinkel etc. umfassen. Es kann auch unterschieden werden, auf welchem Untergrund sich die Landmaschine bewegt, also zum Beispiel ansteigend, eben oder abfallend, trocken oder feucht etc. Insbesondere können eine maximale Beschleunigung und/oder eine maximale Lenkwinkelgeschwindigkeit berücksichtigt werden. Die Lenkwinkelgeschwindigkeit ist die Rate, mit welcher der Lenkwinkel geändert werden kann (zum Beispiel gemessen in Grad pro Sekunde). Der Lenkwinkel kann nicht instantan geändert werden, was vorteilhaft bei der Planung der Fahrroute berücksichtigt wird. Eine Berücksichtigung ist auf der Ebene der Basiselemente möglich, wonach diese keine "unrealistischen" Lenkwinkeländerungen aufweisen. Es ist aber auch möglich, dies dadurch zu berücksichtigen, dass zwischen aufeinanderfolgenden Bewegungselementen keine größeren "Sprünge" im Lenkwinkel zugelassen werden. Durch Berücksichtigung wenigstens einer der genannten Größen ist es zum einen möglich, die fahrtechnischen Möglichkeiten der Landmaschine voll auszuschöpfen, also zum Beispiel einen minimalen Kurvenradius auszunutzen, zum anderen wird vermieden, evtl. Fahrmanöver einzuplanen, die die betreffende Landmaschine gar nicht ausführen kann.

Normalerweise in Kombination mit einer Berücksichtigung der Fahreigenschaften, ist es bevorzugt, dass die Fahrroute unter Berücksichtigung einer Geometrie der ausführenden Landmaschine ermittelt wird. Sofern die Landmaschine bei der Feldbearbeitung ein Anbaugerät nutzt, welches bei Bedarf demontiert und durch ein anderes Anbaugerät ersetzt werden kann, bezieht der Begriff "Geometrie der Landmaschine" ausdrücklich auch die Geometrie des Anbaugeräts mit ein. Mögliche geometrische Eigenschaften, die berücksichtigt werden können, sind Länge und Breite der Landmaschine, Arbeitsbreite (also die Breite desjenigen Bereichs, in dem tatsächlich Erntegut geerntet wird), aber auch die Lage der Antriebsmittel (Räder, gegebenenfalls aber auch Raupenketten). Um eine realistischere Repräsentation der Landmaschine zu erreichen, kann diese auch zum Beispiel als Polygon simuliert werden.

Gemäß einer Ausgestaltung basiert das Optimierungskriterium wenigstens teilweise auf einer Minimierung einer Fahrstrecke. Hierbei kann die gesamte Fahrroute betrachtet werden, es könnte aber auch nur ein Teil derselben, zum Beispiel die Fahrstrecke innerhalb des wenigstens einen Eckbereichs, ausgewertet werden. Auch könnte eine Fahrstrecke in Rückwärtsfahrt betrachtet werden, eine Fahrstrecke mit inaktivem Bearbeitungsorgan oder dergleichen.

Alternativ oder zusätzlich kann das Optimierungskriterium wenigstens teilweise auf einer Minimierung einer Fahrzeit basieren. Hierbei kann zum einen die Fahrzeit für die gesamte Fahrroute zugrunde gelegt werden. Es kann aber auch hier zum Beispiel die notwendige Fahrzeit in Eckbereichen, in Rückwärtsfahrt, mit inaktivem Bearbeitungsorgan oder anderes betrachtet werden. Eine Minimierung der Fahrzeit ist aus unterschiedlichen Gründen nicht zwangsläufig gleichbedeutend mit einer Minimierung der Fahrstrecke. So könnte es zum Beispiel sein, dass der Bearbeitungsbereich ein Gefälle aufweist, das dazu führt, dass eine Strecke in einer Richtung schneller durchfahren werden kann als in Gegenrichtung. Die Anzahl und individuelle Länge der insgesamt "bergab" oder "bergauf" durchfahrenen Strecken kann sich bei Fahrrouten gleicher Länge unterscheiden und somit auch die Fahrzeit, die insgesamt für die Fahrspuren benötigt wird. Auch kann eine Fahrtrichtungsumkehr aufgrund der damit verbundenen Brems- und Beschleunigungsphasen die Fahrzeit erhöhen.

Weiterhin alternativ oder zusätzlich kann das Optimierungskriterium wenigstens teilweise auf einer Minimierung eines Energieverbrauchs basieren. Hierbei wird normalerweise der voraussichtliche Energieverbrauch für die gesamte Fahrroute betrachtet. Dieser hängt von der gesamten Fahrstrecke ab, allerdings evtl. auch von anderen Parametern. So kann der Energieverbrauch auch von der Ausrichtung einzelner Stecken abhängen, wenn die Landmaschine zum Beispiel eine mehr oder weniger starke Steigung bewältigen muss. Auch kann die Anzahl und individuelle Länge der insgesamt "bergab" oder "bergauf" durchfahrenen Strecken kann sich unterscheiden.

Eine Ausführungsform sieht vor, dass für jede Fahrroute eine von einem Fahrwerk der Landmaschine überfahrene unbearbeitete Fläche als erste Überfahrfläche und/oder eine vom Fahrwerk überfahrene bearbeitete Fläche als zweite Überfahrfläche ermittelt wird und das Optimierungskriterium wenigstens teilweise auf einer Minimierung einer Überfahrfläche basiert. Das heißt die erste Überfahrfläche ist die Fläche, die überfahren wird, bevor sie bearbeitet werden konnte. Im Falle einer Erntemaschine wird hier also Bestand überfahren, bevor er geerntet werden konnte, was die Erntegutqualität herabsetzt und einen späteren Erntevorgang an dieser Stelle erschwert oder unmöglich macht (zum Beispiel, weil überfahrene und heruntergedrückte Pflanzen nicht mehr erfasst werden können). Im Fall einer Bodenbearbeitung kann ein Überfahren unbearbeiteter Fläche ebenfalls eine spätere Bearbeitung erschweren. Die zweite Überfahrfläche entspricht der bereits bearbeiteten Fläche, die vom Fahrwerk überfahren wird. Im Fall einer Erntemaschine besteht die Gefahr, dass zum Beispiel abgemähte Pflanzen, die am Boden liegen, beschädigt und/oder verschmutzt werden. Im Fall einer Bodenbearbeitung kann der Effekt der Bearbeitung zunichte gemacht werden, zum Beispiel wenn bereits gepflügter Boden wieder überfahren wird, oder zumindest geschmälert werden, zum Beispiel wenn gedüngter Boden durch Überfahren verdichtet wird. Daher kann es sinnvoll sein, eine Minimierung wenigstens einer oder beider Überfahrflächen anzustreben.

Unter Umständen kann das Optimierungskriterium ausschließlich in der Minimierung der unbearbeiteten Fläche liegen. Im Allgemeinen steht diese Minimierung allerding bis zu einem gewissen Grad in Konkurrenz mit einer ebenfalls wünschenswerten Minimierung oder Maximierung eines anderen Optimierungswertes. In diesem Fall stellt die isolierte Optimierung eines einzelnen Optimierungswertes keine zufriedenstellende Lösung dar. Eine Ausgestaltung sieht daher vor, dass das Optimierungskriterium auf der Optimierung einer gewichteten Kombination von Optimierungswerten basiert. Statt von einer gewichteten Kombination kann man normalerweise auch von einer Linearkombination sprechen, wenngleich es prinzipiell denkbar wäre, dass ein Optimierungswert nicht-linear, also zum Beispiel quadratisch, eingeht. Ein Optimierungswert könnte dabei beispielsweise die unbearbeitete Fläche sein, während ein anderer Optimierungswert die Fahrzeit ist. Das Optimierungskriterium könnte dann in der Minimierung einer Summe liegen, wobei ein Summand proportional zur Fahrzeit und ein anderer Summand proportional zur unbearbeiteten Fläche ist. Durch Wahl geeigneter Gewichtungsfaktoren und/oder Normierungsfaktoren kann das relative Gewicht des jeweiligen Optimierungswertes angepasst werden. Die Summe kann auch als "Gesamt-Optimierungswert" $W_{gesamt}$ angesehen werden, welcher wie folgt definiert ist:

$$W_{gesamt} = \sum_k a_k W_k$$

wobei $W_k$ den k-ten Optimierungswert, zum Beispiel die Fahrstrecke, Fahrzeit etc. bezeichnet und $a_k$ der jeweilige Gewichtungsfaktor ist.

Alternativ kann das Optimierungskriterium auf einer Pareto-Optimierung mehrerer Optimierungswerte basieren. Das heißt es wird - innerhalb eines untersuchten Parameterbereichs - ein Parametersatz gesucht, der die Optimierungswerte insoweit optimiert, als kein anderer Parametersatz einen der Optimierungswerte demgegenüber verbessert, ohne einen anderen zu verschlechtern. Zum Beispiel könnte eine Fahrtroute ein Pareto-Optimum hinsichtlich unbearbeiteter Fläche und Fahrstrecke darstellen, wenn keine andere Fahrtroute eine geringere unbearbeitete Fläche liefert, ohne eine längere Fahrstrecke zu liefern, und keine andere Fahrtroute eine kürzere Fahrstrecke liefert, ohne eine größere unbearbeitete Fläche zu liefern.

Einerseits ist es denkbar, dass die Landmaschine über ein Computersystem (das heißt eine Auswertungs- und/oder Recheneinheit) verfügt, das in der Lage ist, anhand ausreichender Informationen über den Bearbeitungsbereich die optimale Fahrroute zu ermitteln. In vielen Fällen ist es allerdings effizienter, wenn für die Landmaschine die Fahrroute extern ermittelt wird und die Steuerdaten extern erzeugt und an die Landmaschine übermittelt werden. Die Ermittlung der Fahrroute und die Erzeugung der Steuerdaten erfolgen dann über ein zentrales System und/oder eine zentrale Auswerteeinheit, die sogar stationär in einem Gebäude untergebracht sein kann, das nicht einmal in der Nähe des Bearbeitungsbereichs sein muss. Durch drahtlose Kommunikation könnten die erzeugten Steuerdaten an die Landmaschine übermittelt werden, die diese dann zum Abfahren der Fahrroute nutzt. Durch die zentrale, externe Verarbeitung sind auf Seiten der Landmaschine nur wenige Ressourcen im Hinblick auf Rechenkapazität und Speicherplatz notwendig.

Es können Steuerdaten für eine autonom fahrende Landmaschine erzeugt werden, welche die Feldbearbeitung anhand der Steuerdaten autonom durchführt. Das heißt soweit dieser Landmaschine die Steuerdaten zur Verfügung stehen, kann sie ohne menschliches Eingreifen die ermittelte Fahrroute abfahren und die zugehörige Feldbearbeitung durchführen. Die Landmaschine kann zur Navigation unterschiedliche interne und/oder externe Sensoren nutzen. Unter Umständen kann sie sich wenigstens teilweise an einer Struktur des Bearbeitungsbereichs orientieren, zum Beispiel einer Struktur eines Bestandes, welchen der Bearbeitungsbereich aufweist (Bestandsgrenze, Reihen etc.). Es können, auch in Abhängigkeit von der Beschaffenheit des Bearbeitungsbereichs, unterschiedliche Sensoren verwendet werden, zum Beispiel mechanische oder optische Sensoren, aktive oder passive Sensoren. Insbesondere kann die Landmaschine einen GNSS-Empfänger nutzen, um ihre aktuelle Ist-Position festzustellen und mit einer der optimalen Fahrroute entsprechenden Soll-Position zu vergleichen.

Es können auch Steuerdaten für eine durch einen Fahrer gelenkte Landmaschine erzeugt werden, so dass anhand der Steuerdaten Steueranweisungen für den Fahrer erzeugt werden können. Dabei können die Steuerdaten innerhalb der Landmaschine zur Verfügung stehen und in Steueranweisungen umgesetzt werden. Alternativ wäre es auch denkbar, dass anhand der Steuerdaten extern Steueranweisungen erstellt und an die Landmaschine übermittelt werden. Es ist auch denkbar, dass ein und dieselbe Landmaschine zeitweise autonom gelenkt wird und zeitweise durch einen Fahrer. Die Steueranweisungen können visuell und/oder akustisch ausgegeben werden. Die Steueranweisungen könnten den Fahrer explizit darauf hinweisen, wie er die Landmaschine zu lenken hat, oder es könnte zum Beispiel auf einem Bildschirm eine Soll-Fahrlinie angezeigt werden, anhand derer sich der Fahrer orientieren kann.

Die Aufgabe wird weiterhin gelöst mit einem Computersystem zur Fahrroutenoptimierung für eine Feldbearbeitung, bei welcher ein vorgegebener Bearbeitungsbereich von einer Landmaschine entsprechend einer Fahrroute durchfahren wird, wobei der Bearbeitungsbereich wenigstens einen Eckbereich aufweist mit einer zumindest eckenartigen Randstruktur, wobei das Computersystem dazu eingerichtet ist:

- eine automatische Optimierung der Fahrroute durchzuführen, indem aus einer Mehrzahl möglicher Fahrrouten eine entsprechend einem Optimierungskriterium optimale Fahrroute ermittelt wird, wobei das Optimierungskriterium wenigstens teilweise auf einer Minimierung einer unbearbeiteten Fläche basiert, und
- automatisch Steuerdaten zur Steuerung der Landmaschine während der Feldbearbeitung zu erzeugen, welche Steuerdaten die optimale Fahrroute repräsentieren.

Die genannten Begriffe wurden bereits oben mit Bezug auf das erfindungsgemäße Verfahren erläutert und werden daher nicht nochmals erklärt. Das Computersystem weist wenigstens einen Computer, das heißt Rechner, und/oder eine Datenverarbeitungseinheit auf. Es kann allerdings auch weitere Komponenten aufweisen, zum Beispiel drahtlose und/oder drahtgebundene Schnittstellen zur ein- oder beidseitigen Kommunikation mit anderen Vorrichtungen. Vorteilhafte Ausgestaltungen des erfindungsgemäßen Computersystems entsprechen denen des erfindungsgemäßen Verfahrens.

Insbesondere kann es sich bei dem Computersystem um ein Farm-Management-Informationssystem handeln, welches außerhalb der Landmaschine angeordnet ist, zum Beispiel stationär innerhalb eines Gebäudes. Das Computersystem könnte auch in einer mobilen Einheit (Laptop, Tablet, Smartphone etc.) angeordnet sein, welche Steueranweisungen für den Fahrer anzeigt oder Steuerdaten (normalerweise drahtlos) an die Landmaschine übermittelt. Allgemeiner gesprochen kann das Computersystem extern bezüglich der Landmaschine ausgebildet und dazu eingerichtet sein, die Steuerdaten zur Übertragung an die Landmaschine zu erzeugen. Es kann eine Schnittstelle zur Datenübertragung an die Landmaschine aufweisen und dazu eingerichtet sein, die Steuerdaten (drahtgebunden oder drahtlos) an die Landmaschine zu übertragen.

Alternativ kann das Computersystem in eine Landmaschine integriert sein, das heißt es kann ein Teil der Landmaschine sein und innerhalb dieser angeordnet sein. Das Computersystem kann in jedem Fall teilweise softwaremäßig realisiert sein. Unabhängig davon, ob das Computersystem Teil der Landmaschine ist oder nicht, kann es eingerichtet sein, die Landmaschine entsprechend der Steuerdaten zu steuern.

Entsprechend der zweiten Alternative wird durch die Erfindung auch eine Landmaschine zur Verfügung gestellt, mit einem Computersystem zur Fahrroutenoptimierung für eine Feldbearbeitung, bei welcher ein vorgegebener Bearbeitungsbereich von der Landmaschine entsprechend einer Fahrroute durchfahren wird, wobei der Bearbeitungsbereich wenigstens einen Eckbereich aufweist mit einer zumindest eckenartigen Randstruktur, wobei das Computersystem dazu eingerichtet ist:

- eine automatische Optimierung der Fahrroute durchzuführen, indem aus einer Mehrzahl möglicher Fahrrouten eine entsprechend einem Optimierungskriterium optimale Fahrroute ermittelt wird, wobei das Optimierungskriterium wenigstens teilweise auf einer Minimierung einer unbearbeiteten Fläche basiert, und
- automatisch Steuerdaten zur Steuerung der Landmaschine während der Feldbearbeitung zu erzeugen, welche Steuerdaten die optimale Fahrroute repräsentieren.

Wiederum entsprechen bevorzugte Ausführungsformen der erfindungsgemäßen Landmaschine denen des erfindungsgemäßen Verfahrens.

Durch die Erfindung wird weiterhin ein Computerprogrammprodukt zur Verfügung gestellt, mit Programmcodemitteln, welche ein Computersystem befähigen, das erfindungsgemäße Verfahren auszuführen. Das Computerprogrammprodukt beinhaltet also eine Software, die auf der Hardware des Computersystems die genannten Schritte implementiert. Es kann in Form eines Datenträgers vorliegen, auf dem die Software, das heißt die Programmcodemittel (flüchtig oder nicht-flüchtig), gespeichert sind. Der Datenträger kann dabei auch dauerhaft in das Computersystem integriert und/oder integrierbar sein.

Im Folgenden wird die Erfindung anhand von Figuren beschrieben. Die Figuren sind lediglich beispielhaft und schränken den allgemeinen Erfindungsgedanken nicht ein. Es zeigen

Fig. 1    eine Draufsicht eines Flurstücks, einer Landmaschine sowie eines erfindungsgemäßen Computersystems zur Fahrroutenoptimierung;

Fig. 2    eine Darstellung verschiedener Basiselemente für eine Fahrroute;

Fig. 3    eine Draufsicht eines Teils des Flurstücks aus Fig. 1 mit der Landmaschine sowie einem Teil einer ersten Fahrroute;

Fig. 4    eine Draufsicht entsprechend Fig.3 mit einem Teil einer zweiten Fahrroute;

Fig. 5    eine Draufsicht entsprechend Fig.3 mit einem Teil einer dritten Fahrroute;

Fig. 6    eine Draufsicht entsprechend Fig.3 mit einem Teil der dritten Fahrroute; sowie

Fig. 7    ein Flussdiagramm eines erfindungsgemäßen Verfahrens zur Fahrroutenoptim ierung.

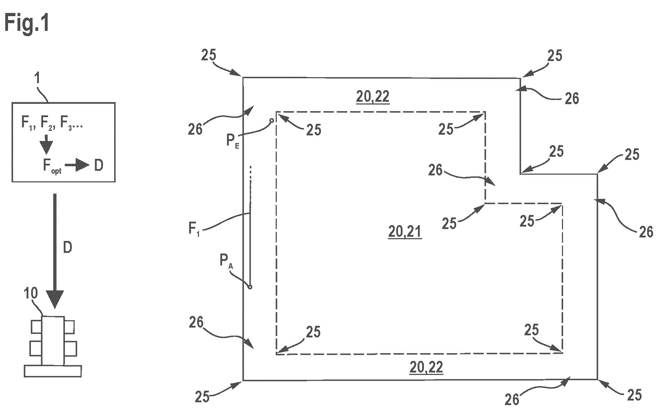

Fig. 1 zeigt eine Draufsicht eines Flurstücks 20, das heißt eines Feldes, welches sich in einen Innenbereich 21 sowie ein randseitig desselben angeordnetes Vorgewende 22 unterteilen lässt. Stark schematisiert sind eine Landmaschine 10, zum Beispiel ein Mähdrescher, sowie ein erfindungsgemäßes Computersystem 1 zur Fahrroutenoptimierung dargestellt, das in diesem Fall außerhalb der Landmaschine 10 angeordnet ist, beispielsweise in einem Gebäude, das weit von dem Flurstück 20 entfernt sein kann. Es versteht sich, dass das Computersystem 1 und die Landmaschine 10 in Fig.1 nicht maßstäblich in Relation zueinander oder zum Flurstück 20 dargestellt sind. Das Computersystem 1 kann durch ein Farm-Management-Informationssystem gebildet sein oder einen Teil desselben darstellen. Es weist eine hier nicht einzeln dargestellte Schnittstelle zur drahtlosen Datenübertragung an die Landmaschine 10 auf. Die Landmaschine 10 weist ein Fahrwerk 11 mit zwei Achsen auf, von denen wenigstens eine lenkbar ausgebildet ist. Außerdem weist sie als Bearbeitungsorgan 12 ein Mähwerk auf. Es ist vorgesehen, dass sie im Flurstück 20 eine Feldbearbeitung durchführt, beispielsweise das Mähen von Gras. Dabei soll zunächst das Vorgewende 22 bearbeitet werden, bevor der Innenbereich 21 bearbeitet wird. Für die erste Phase des Erntevorgangs bildet somit das Vorgewende 22 einen Bearbeitungsbereich, der möglichst vollständig und effizient bearbeitet werden soll. Wie in Fig.1 erkennbar ist, weist das Vorgewende 22 eine Mehrzahl von Eckbereichen 26 auf, die nach außen hin sowie nach innen zum Innenbereich 21 hin jeweils eine eckenartige Randstruktur aufweisen, welche auch einfach als Ecke 25 bezeichnet werden kann. Die jeweilige Ecke 25 weist einen Krümmungsradius auf, der kleiner ist als ein minimaler Arbeitsradius, entsprechend welchem das Bearbeitsorgan 12 bei einer Kurvenfahrt führbar ist. Daher kann die Landmaschine 10 den Eckbereich 26 mit einer einfachen Kurvenfahrt nicht vollständig bearbeiten.

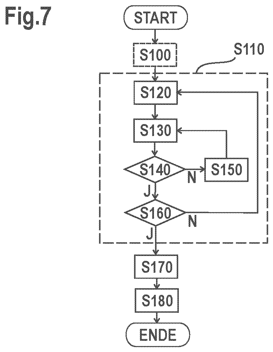

Vor der Feldbearbeitung führt das Computersystem 1 ein erfindungsgemäßes Verfahren zur Fahrroutenoptimierung durch, welches anhand des Flussdiagramms in Fig. 7 sowie der weiteren Figuren erläutert wird. Das Computersystem 1 verfügt über verschiedene Daten betreffend das Vorgewende 22, insbesondere die Geometrie desselben. Optional können weitere Daten wie beispielsweise die lokale Bodenbeschaffenheit oder ein eventuell vorhandenes Gefälle einbezogen werden. Des Weiteren verfügt das Computersystem 1 über Daten betreffend die Geometrie der Landmaschine 10 einschließlich des Bearbeitungsorgans 12, sowie ihre Fahreigenschaften, zum Beispiel ihre Höchstgeschwindigkeit in Vorwärts- und Rückwärtsfahrt, ihren minimalen Wenderadius etc. Weiterhin können die Leistungsdaten der Landmaschine 10 in Abhängigkeit von Bodenbeschaffenheit, Gefälle oder anderen Faktoren bekannt sein, zum Beispiel eine hiervon abhängige Geschwindigkeit, ein Treibstoffverbrauch oder dergleichen.

Die Fahrroutenoptimierung dient der Auffindung einer optimalen Fahrroute $F_{opt}$ für die Landmaschine 10. Hierfür wird ein Optimierungskriterium definiert und eine Optimierung wird auf Basis dieses Optimierungskriteriums durchgeführt. Das Optimierungskriterium basiert teilweise auf einer Minimierung einer unbearbeiteten Fläche. Zusätzlich kann es teilweise auf einer Minimierung einer gesamten Fahrstrecke, einer Minimierung einer gesamten Fahrzeit und/oder einer Minimierung eines Treibstoffverbrauchs basieren. Auch kann das Optimierungskriterium teilweise auf einer Minimierung einer vom Fahrwerk 11 überfahrenen unbearbeiteten Fläche als erster Überfahrfläche und/oder einer Minimierung einer vom Fahrwerk überfahrenen bearbeiteten Fläche als zweiter Überfahrfläche basieren. Somit werden mehrere Teilkriterien definiert, zwischen denen eine gewisse Konkurrenz bestehen kann. Zum einen kann die Minimierung einer gewichteten Kombination verschiedener Optimierungswerte (zum Beispiel unbearbeitete Fläche, Fahrstrecke, Fahrzeit etc.) angestrebt werden, zum anderen kann auch eine Pareto-Optimierung hinsichtlich verschiedener Optimierungswerte durchgeführt werden.

Wie in Fig.1 angedeutet ist, welche nur einen Anfangsabschnitt einer ersten Fahrroute $F_1$ zeigt, können ein Anfangspunkt $P_A$ und ein Endpunkt $P_E$ vorgeben werden, welche der Routenplanung zugrunde gelegt werden sollen. In diesem Fall ist der Anfangspunkt $P_A$ nahe dem äußeren Rand des Vorgewendes 22 angeordnet und der Endpunkt $P_E$ nahe dem inneren Rand, benachbart zum Innenbereich 21. Seine Position ist so gewählt, dass von dort unmittelbar mit einer - nicht dargestellten - systematischen Bearbeitung des Innenbereichs 21 begonnen werden kann, bei welcher der Innenbereich 21 in parallelen Fahrspuren bearbeitet wird. Es ist aber auch möglich, dem Computersystem 1 keinen konkreten Anfangspunkt oder Endpunkt vorzugeben.

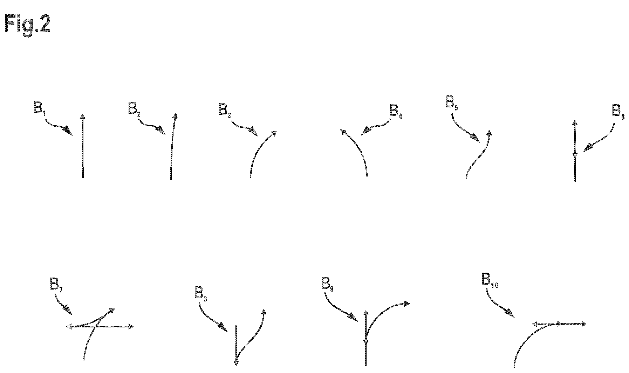

Die jeweilige Fahrroute $F_1$-$F_3$ wird durch Kombination von Bewegungselementen $E_1$-$E_{11}$ erstellt. Dabei wird jedes Bewegungselement $E_1$-$E_{11}$ ausgewählt aus einer Mehrzahl von vordefinierten Basiselementen $B_1$-$B_{10}$, von denen einige beispielhaft in Fig. 2 dargestellt sind. Zusätzlich zu den dargestellten Basiselementen $B_1$-$B_{10}$ sind noch weitere im Computersystem 1 abgespeichert. Andererseits müssen nicht alle der dargestellten Basiselementen $B_1$-$B_{10}$ vorgesehen sein. Ein erstes Basiselement $B_1$ entspricht einer Geradeausfahrt, ein zweites Basiselement $B_2$ entspricht einer Rechtskurve mit einem geringen Lenkwinkel (beispielsweise 5°), während ein hier dargestelltes drittes Basiselement $B_3$ einer Rechtskurve mit einem größeren Lenkwinkel (beispielsweise 30°) entspricht. Ein viertes Basiselement $B_4$ entspricht einer Linkskurve mit dem gleichen Lenkwinkel. Ein fünftes Basiselement $B_5$ entspricht einer S-Kurve. Ein sechstes Basiselement $B_6$ beinhaltet eine Fahrtrichtungsumkehr, wobei zunächst geradeaus vorwärtsgefahren wird und danach ein Teil der Strecke gerade wieder zurück gefahren wird. Dabei ist hier wie im Folgenden eine Vorwärtsfahrt jeweils durch eine ausgefüllte Pfeilspitze dargestellt und eine Rückwärtsfahrt durch eine leere Pfeilspitze.

Ein siebtes Basiselement $B_7$ beinhaltet zunächst eine Rechtskurve in Geradeausfahrt, gefolgt von einer rückwärts gefahrenen Linkskurve und schließlich einer vorwärts gefahrenen Geradeausfahrt. Ein achtes Basiselement $B_8$ beinhaltet eine gerade Rückwärtsfahrt, gefolgt von einer vorwärtsgefahrenen S-Kurve. Ein neuntes Basiselement $B_9$ beinhaltet eine Kombination des sechsten Basiselements $B_6$ mit einer anschließenden Rechtskurve. Ein zehntes Basiselement $B_{10}$ beinhaltet eine vorwärts gefahrene Rechtskurve, gefolgt von einem geraden Zurücksetzen und einer anschließenden Geradeausfahrt.

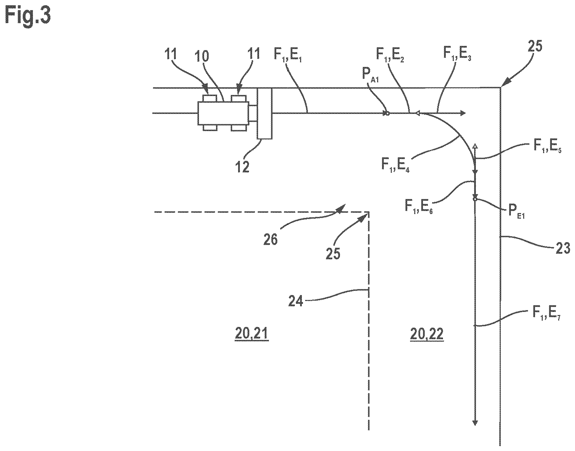

Fig. 3 zeigt einen Teil des Flurstücks 20 mit einem Eckbereich 26 des Vorgewendes 22 sowie Teile der ersten Fahrroute $F_1$. Um die Struktur der ersten Fahrtroute $F_1$ deutlich zu machen, sind einzelne Bewegungselemente derselben eingezeichnet. Abseits des Eckbereich 26 nähert sich die Landmaschine 10 in einer Geradeausfahrt parallel zur Kante des Vorgewendes 22, was einem ersten Bewegungselement $E_1$ entspricht. Dieses wird zu einem Eckbereich-Anfangspunkt $P_{A1}$ fortgesetzt. Letzterer kann durch das Computersystem 1 oder durch einen Benutzer definiert sein als ein Punkt, welchen jede Fahrroute $F_1$-$F_3$ enthalten muss, während vor und nach diesem Punkt die Route variiert werden kann. Gleiches gilt für einen Eckbereich-Endpunkt $P_{E1}$. Auf das erste Bewegungselement $E_1$ folgt ein zweites Bewegungselement $E_2$, das ebenfalls eine Geradeausfahrt repräsentiert, wodurch das Bearbeitungsorgan 12 bis in die Ecke 25 geführt werden kann. Hierauf folgt wiederum ein drittes Bewegungselement $E_3$, dass einem geraden Zurücksetzen entspricht. Hierdurch ist die Landmaschine 10 in einer Position, aus der sie mit einer nachfolgenden Rechtskurve entsprechend einem vierten Bewegungselement $E_4$ in eine Position parallel zur nächsten Kante des Vorgewendes 22 gelangt. In einem fünften Bewegungselement Es erfolgt ein nochmaliges Zurücksetzen, um einen bisher nicht bearbeiteten Teil des Vorgewendes 22 mit dem Bearbeitungsorgan 12 zu erfassen, bevor mit einem wonach eine Vorwärtsfahrt gemäß einem sechsten Bewegungselement $E_6$ zum Eckbereich-Endpunkt $P_{E1}$. Und weiter gemäß einem siebten Bewegungselement $E_7$ entlang der Kante des Vorgewendes 22 erfolgt. In diesem Beispiel entsprechend das erste, zweite, sechste und siebte Bewegungselement $E_1$, $E_2$, $E_6$, $E_7$ jeweils im Wesentlichen dem ersten Basiselement $B_1$, während das vierte Bewegungselement $E_4$ ähnlich dem dritten Basiselement $B_3$ strukturiert ist. Das zweite und dritte Bewegungselement $E_2$, Es könnten auch miteinander kombiniert werden, was dem sechsten Basiselement $B_6$ entspräche. Eine Kombination des vierten, fünften und sechsten Bewegungselement $E_4$, $E_5$, $E_6$ entspräche dem zehnten Basiselement $B_{10}$. Jedes der Bewegungselemente $E_1$-$E_7$ kann durch verschiedene Betriebsparameter charakterisiert werden. Dies können eine Fahrtrichtung, eine Fahrgeschwindigkeit, ein Lenkwinkel und/oder ein Aktivierungszustand des Bearbeitungsorgans 12 sein. Das Computersystem 1 kann dabei zum Beispiel eine Höchstgeschwindigkeit, eine Beschleunigung, einen maximalen Lenkwinkel sowie eine Lenkwinkelgeschwindigkeit der Landmaschine 10 berücksichtigen. Hierdurch wird die Fahrroute in einer realistischen Weise geplant, so wie sie auch tatsächlich von der Landmaschine 10 durchfahren werden kann. Das Computersystem berücksichtigt auch die Geometrie der Landmaschine 10 sowie die des Bearbeitungsorgans 12. Insbesondere Letzteres ist wesentlich für eine realistische Bestimmung der bearbeiteten, und somit auch der unbearbeiteten, Fläche.

Hier wie auch in den weiteren Beispielen weist die Fahrroute im Eckbereich 26 Routenelemente kürzerer Fahrstrecke auf als außerhalb des Eckbereichs 26. Durch diese Maßnahme wird der Planung- und Rechenaufwand minimiert, da vorausgesetzt werden kann, dass in den Bereichen des Vorgewendes 22 mit gerader Kante eine durchgehend gerade Fahrlinie die optimale Lösung darstellt. Eine detaillierte Untersuchung unterschiedlicher Optionen ist daher dort entbehrlich.

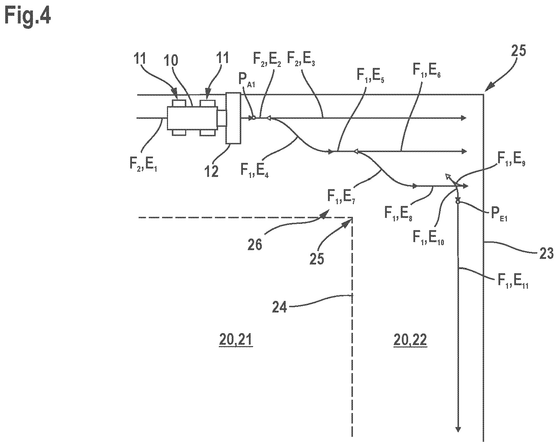

Fig. 4 zeigt einen Teil einer zweiten Fahrroute $F_2$. Auf dem Weg zum Eckbereich-Anfangspunkt $P_{A1}$ erfolgt wiederum eine Geradeausfahrt gemäß einem ersten Bewegungselement $E_1$. Die Geradeausfahrt wird in einem zweiten Bewegungselement $E_2$ so weit fortgesetzt, dass das Bearbeitungsorgan 12 bis in die Ecke 25 geführt wird. In einem dritten Bewegungselement Es setzt die Landmaschine 10 zurück, bevor sie in einer S-Kurve entsprechend einem vierten Bewegungselement $E_4$ in eine parallele Fahrspur wechselt. Dort wiederholt sich ein ähnliches Manöver mit einer vorwärts gerichteten Geradeausfahrt in einem fünften Bewegungselement $E_5$, gefolgt von einem Zurücksetzen in einem sechsten Bewegungselement Es. Anschließend folgt ein einem siebten Bewegungselement $E_7$ eine weitere S-Kurve und anschließend eine Geradeausfahrt in einem achten Bewegungselement Es. Die Landmaschine 10 setzt danach in einer Linkskurve gemäß einem neunten Bewegungselement Es zurück und fährt anschließend in einer Rechtskurve eines zehnten Bewegungselements $E_{10}$ wieder vorwärts bis zum Eckbereich-Endpunkt $P_{E1}$. Sie ist nun parallel zur nächsten Kante des Vorgewendes 22 ausgerichtet und setzt ihre Fahrt geradeaus in einem elften Bewegungselement $E_{11}$ fort.

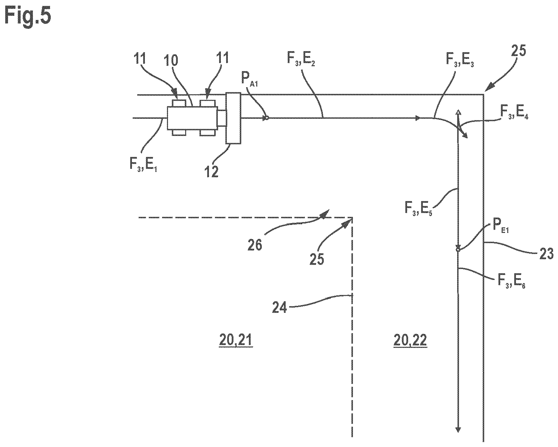

Fig. 5 zeigt einen Teil einer dritten Fahrroute $F_3$. Auf dem Weg zum Eckbereich-Anfangspunkt $P_{A1}$ ist wieder eine Geradeausfahrt gemäß einem ersten Bewegungselement $E_1$ vorgesehen, die in einem zweiten Bewegungselement $E_2$ fortgesetzt wird. Danach fährt die Landmaschine 10 in einem dritten Bewegungselement $E_3$ eine Rechtskurve, bevor sie gemäß einem vierten Bewegungselement $E_4$ in einer Linkskurve zurücksetzt, bis sie parallel zur nächsten Kante des Vorgewendes 22 ausgerichtet ist. Sie fährt im Weiteren gemäß einem fünften Bewegungselement Es geradeaus bis zum Eckbereich-Endpunkt $P_{E1}$ und weiter gemäß einem sechsten Bewegungselement Es.

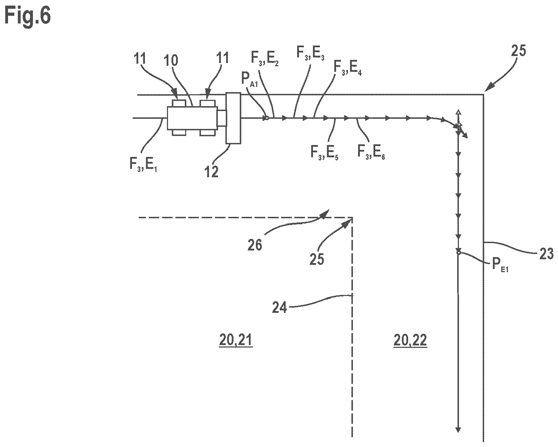

Bei den Beispielen in Fig.3-5 sind die Bewegungselemente im Eckbereich 26 zwar kürzer als außerhalb desselben, aber immer noch so lang, dass zumindest innerhalb einiger Bewegungselemente eine Änderung eines Betriebsparameters zugrunde gelegt werden muss, zum Beispiel eine Beschleunigung oder Lenkwinkeländerung. Dies kann unter Umständen vermieden werden, wenn entsprechend Fig.6 die einzelnen Bewegungselemente so kurzen Fahrstrecken und kurzen Zeitintervallen entsprechen, dass innerhalb eines Bewegungselements die Betriebsparameter als konstant angenommen werden können. In diesem Fall können eine begrenzte Beschleunigung oder eine begrenzten Lenkwinkelgeschwindigkeit dadurch berücksichtigt werden, dass zwischen aufeinanderfolgenden Bewegungselement in nur eine begrenzte Änderung des jeweiligen Betriebsparameters möglich ist.

Die vom Computersystem 1 durchgeführte Fahrroutenoptimierung wird nun anhand des Flussdiagramms von Fig. 6 erläutert. Nach dem Start können in einem optionalen Schritt S100 der Anfangspunkt $P_A$ und der Endpunkt $P_E$ festgelegt werden, was zum Beispiel durch benutzerseitige Eingabe erfolgen kann. Danach erfolgt die eigentliche Optimierung bei S110. Schritt S120 entspricht dem Planungsbeginn einer neuen Fahrroute $F_1$-$F_3$. Dabei kann zum Beispiel der Anfangspunkt $P_A$ gewählt werden, falls dieser nicht benutzerseitig festgelegt wurde. Es kann auch eine anfängliche Ausrichtung der Landmaschine 10 festgelegt werden. In einem Schritt S130 wird ein Basiselement $B_1$-$B_{10}$ als aktuelles Bewegungselement ausgewählt. In Schritt S140 wird geprüft, ob die Fahrroute $F_1$-$F_3$ bereits komplett ist. Dies ist anfänglich natürlich nicht der Fall und das Verfahren fährt mit Schritt S150 fort, wo ein nächstes Bewegungselement ausgewählt wird, welches sich normalerweise an das aktuelle Bewegungselement anschließt. Das Verfahren kehrt zu Schritt S130 zurück, wo nun für das nächste Bewegungselement ein Basiselement ausgewählt wird. Ist die Fahrroute $F_1$-$F_3$ schließlich vollständig, fährt das Verfahren mit Schritt S160 fort. Dort wird geprüft, ob die Fahrroute $F_1$-$F_3$ optimal hinsichtlich des Optimierungskriteriums ist. Zur Berechnung des Optimierungswerts, der auch als Kostenwert bezeichnet werden kann, können jeweils Beiträge einzelner Routenabschnitte der Fahrroute aufsummiert werden, zum Beispiel Beiträge einzelner Bewegungselemente. Ist die Fahrroute nicht optimal, kehrt das Verfahren zu Schritt S120 zurück, wo eine neue Fahrroute geplant wird. Wird in Schritt S160 entschieden, dass die optimale Fahrroute $F_{opt}$ gefunden wurde, ist die Optimierung beendet.

Das Computersystem 1 erzeugt nun in Schritt S170 Steuerdaten D für die Landmaschine 10, die der optimalen Fahrroute $F_{opt}$ entsprechen. Sofern die Landmaschine 10 durch einen Fahrer gesteuert wird, können die Steuerdaten D Anweisungen für den Fahrer entsprechen, anhand derer er die Landmaschine 10 entlang der optimalen Fahrroute $F_{opt}$ steuern kann. Falls die Landmaschine 10 autonom fährt, können die Steuerdaten D explizite Fahr- und/oder Lenkkommandos für die Systeme der Landmaschine 10 beinhalten. In Schritt S180 werden die Steuerdaten D drahtlos an die Landmaschine 10 gesendet, wie in Fig. 1 angedeutet.

Um das Computersystem 1 in die Lage zu versetzen, das dargestellte Verfahren durchzuführen, kann die nötige Software als Computerprogrammprodukt, zum Beispiel als mobiler oder integrierter Datenträger zur Verfügung gestellt werden, welcher Programmcodemittel bzw. einen Programmcode aufweist, der das Verfahren auf der Hardware des Computersystems implementiert.

Gemäß einer nicht dargestellten Alternative kann das Computersystem 1 auch in die Landmaschine 10 integriert sein. In diesem Fall stehen die Steuerdaten D unmittelbar in der Landmaschine 10 zur Verfügung.

**Patentansprüche**

1. Verfahren zur Fahrroutenoptimierung für eine Feldbearbeitung, bei welcher ein vorgegebener Bearbeitungsbereich (20, 21, 22) von einer Landmaschine (10) entsprechend einer Fahrroute ($F_1$-$F_3$) durchfahren wird, wobei der Bearbeitungsbereich (20, 21, 22) wenigstens einen Eckbereich (26) aufweist mit einer zumindest eckenartigen Randstruktur (25), wobei

   - eine automatische Optimierung der Fahrroute durchgeführt wird (S110), indem aus einer Mehrzahl möglicher Fahrrouten ($F_1$-$F_3$) eine entsprechend einem Optimierungskriterium optimale Fahrroute ($F_{opt}$) ermittelt wird, wobei das Optimierungskriterium wenigstens teilweise auf einer Minimierung einer unbearbeiteten Fläche basiert, und
   - automatisch Steuerdaten (D) zur Steuerung der Landmaschine (10) während der Feldbearbeitung erzeugt werden (S170), welche Steuerdaten (D) die optimale Fahrroute ($F_{opt}$) repräsentieren.

2. Verfahren nach Anspruch 1, **dadurch gekennzeichnet, dass** jede Fahrroute durch Kombination aufeinander folgender Bewegungselemente ($E_1$-$E_{11}$) ermittelt wird, wobei jedes Bewegungselement ($E_1$-$E_{11}$) aus einer Mehrzahl vordefinierter Basiselemente ($B_1$-$B_{10}$) ausgewählt wird.

3. Verfahren nach einem der vorherigen Ansprüche, **dadurch gekennzeichnet, dass** in dem wenigstens einen Eckbereich (26) Bewegungselemente ($E_1$-$E_{11}$) mit kürzerer Fahrstrecke verwendet werden als außerhalb eines Eckbereichs (26).

4. Verfahren nach einem der vorherigen Ansprüche, **dadurch gekennzeichnet, dass** jedes Bewegungselement ($E_1$-$E_{11}$) durch wenigstens einen Betriebsparameter charakterisiert ist, wobei wenigstens ein Betriebsparameter eine Fahrtrichtung, eine Fahrgeschwindigkeit, ein Lenkwinkel und/oder ein Aktivierungszustand eines Bearbeitungsorgans (12) ist.

5. Verfahren nach einem der vorherigen Ansprüche, **dadurch gekennzeichnet, dass** wenigstens in einem Teil der Fahrroute ($F_1$-$F_3$) Bewegungselemente ($E_1$-$E_{11}$) kombiniert werden, innerhalb derer der wenigstens eine Betriebsparameter jeweils konstant ist, wobei sich wenigstens ein Betriebsparameter von einem Bewegungselement ($E_1$-$E_{11}$) zum nächsten Bewegungselement ($E_1$-$E_{11}$) ändert.

6. Verfahren nach einem der vorherigen Ansprüche, **dadurch gekennzeichnet, dass** sich wenigstens ein Betriebsparameter innerhalb wenigstens eines

Bewegungselements ($E_1$-$E_{11}$) ändert.

7. Verfahren nach einem der vorherigen Ansprüche, **dadurch gekennzeichnet, dass** für wenigstens einen Teil der Fahrroute ($F_1$-$F_3$) ein Anfangspunkt ($P_A$, $P_{A1}$) und ein Endpunkt ($P_E$, $P_{E1}$) definiert werden, welche die Fahrroute ($F_1$-$F_3$) enthalten muss.

8. Verfahren nach einem der vorherigen Ansprüche, **dadurch gekennzeichnet, dass** die Fahrroute ($F_1$-$F_3$) unter Berücksichtigung von Fahreigenschaften der ausführenden Landmaschine (10), insbesondere einer maximalen Beschleunigung und/oder einer maximalen Lenkwinkelgeschwindigkeit, ermittelt wird.

9. Verfahren nach einem der vorherigen Ansprüche, **dadurch gekennzeichnet, dass** die Fahrroute ($F_1$-$F_3$) unter Berücksichtigung einer Geometrie der ausführenden Landmaschine (10) ermittelt wird.

10. Verfahren nach einem der vorherigen Ansprüche, **dadurch gekennzeichnet, dass** für jede Fahrroute ($F_1$-$F_3$) eine von einem Fahrwerk (11) der Landmaschine (10) überfahrene unbearbeitete Fläche als erste Überfahrfläche und/oder eine vom Fahrwerk (11) überfahrene bearbeitete Fläche als zweite Überfahrfläche ermittelt wird und das Optimierungskriterium wenigstens teilweise auf einer Minimierung einer Überfahrfläche basiert.

11. Verfahren nach einem der vorherigen Ansprüche, **dadurch gekennzeichnet, dass** das Optimierungskriterium wenigstens teilweise auf einer Minimierung einer Fahrstrecke, einer Minimierung einer Fahrzeit, und/oder einer Minimierung eines Energieverbrauchs basiert.

12. Verfahren nach einem der vorherigen Ansprüche, **dadurch gekennzeichnet, dass** für die Landmaschine (10) die Fahrroute ($F_1$-$F_3$) extern ermittelt wird und die Steuerdaten (D) extern erzeugt (S170) und an die Landmaschine übermittelt werden (S180).

13. Verfahren nach einem der vorherigen Ansprüche, **dadurch gekennzeichnet, dass** Steuerdaten (D) für eine autonom fahrende Landmaschine (10) erzeugt werden, welche die Feldbearbeitung anhand der Steuerdaten (D) autonom durchführt.

14. Verfahren nach einem der vorherigen Ansprüche, **dadurch gekennzeichnet, dass** Steuerdaten (D) für eine durch einen Fahrer gelenkte Landmaschine (10) erzeugt werden, so dass anhand der Steuerdaten (D) Steueranweisungen für den Fahrer erzeugt werden können.

15. Computersystem (1) zur Fahrroutenoptimierung für eine Feldbearbeitung, bei welcher ein vorgegebener Bearbeitungsbereich (20, 21, 22) von einer Landmaschine (10) entsprechend einer Fahrroute ($F_1$-$F_3$) durchfahren wird, wobei der Bearbeitungsbereich (20, 21, 22) wenigstens einen Eckbereich (26) aufweist mit einer zumindest eckenartigen Randstruktur (25), wobei das Computersystem (1) dazu eingerichtet ist:

   - eine automatische Optimierung der Fahrroute ($F_1$-$F_3$) durchzuführen (S110), indem aus einer Mehrzahl möglicher Fahrrouten ($F_1$-$F_3$) eine entsprechend einem Optimierungskriterium optimale Fahrroute ($F_{opt}$) ermittelt wird, wobei das Optimierungskriterium wenigstens teilweise auf einer Minimierung einer unbearbeiteten Fläche basiert, und
   - automatisch Steuerdaten (D) zur Steuerung der Landmaschine (10) während der Feldbearbeitung zu erzeugen (S170), welche Steuerdaten (D) die optimale Fahrroute ($F_{opt}$) repräsentieren.

16. Landmaschine (10) mit einem Computersystem (1) zur Fahrroutenoptimierung für eine Feldbearbeitung, bei welcher ein vorgegebener Bearbeitungsbereich (20, 21, 22) von der Landmaschine (10) entsprechend einer Fahrroute ($F_1$-$F_3$) durchfahren wird, wobei der Bearbeitungsbereich (20, 21, 22) wenigstens einen Eckbereich (26) aufweist mit einer zumindest eckenartigen Randstruktur (25), wobei das Computersystem (1) dazu eingerichtet ist:

   - eine automatische Optimierung der Fahrroute ($F_1$-$F_3$) durchzuführen, indem aus einer Mehrzahl möglicher Fahrrouten ($F_1$-$F_3$) eine entsprechend einem Optimierungskriterium optimale Fahrroute ($F_{opt}$) ermittelt wird (S130), wobei das Optimierungskriterium wenigstens teilweise auf einer Minimierung einer unbearbeiteten Fläche basiert, und
   - automatisch Steuerdaten (D) zur Steuerung der Landmaschine (10) während der Feldbearbeitung zu erzeugen (S170), welche Steuerdaten (D) die optimale Fahrroute ($F_{opt}$) repräsentieren.

17. Computerprogrammprodukt mit Programmcodemitteln, welche ein Computersystem (1) befähigen, das Verfahren nach einem der Ansprüche 1 bis 14 durchzuführen.

Fig.1

Fig.2

Fig.3

Fig.4

Fig.5

Fig.6

Fig.7

START

S100

S110

S120

S130

S140 N → S150

J

S160 N

J

S170

S180

ENDE

Europäisches
Patentamt

European
Patent Office

Office européen
des brevets

# EUROPÄISCHER RECHERCHENBERICHT

Nummer der Anmeldung

EP 24 18 7222

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 11 320 279 B2 (KUBOTA KK [JP]) 3. Mai 2022 (2022-05-03) * das ganze Dokument * ----- | 1,2,4,7, 9,11-17 | INV. A01B69/04 G05D1/00 G05D1/43 |
| A | DE 10 2004 027242 A1 (CLAAS SELBSTFAHR ERNTEMASCH [DE]) 22. Dezember 2005 (2005-12-22) * das ganze Dokument * ----- | 1-17 | G05D1/644 G05D1/648 |
| A | US 10 368 475 B2 (CROPZILLA INC [US]; CROPZILLA SOFTWARE INC [US]) 6. August 2019 (2019-08-06) * das ganze Dokument * ----- | 1-17 | ADD. G05D105/15 |
| A | US 2014/081568 A1 (PIEPER JOSHUA J [US] ET AL) 20. März 2014 (2014-03-20) * das ganze Dokument * ----- | 1-17 | |

RECHERCHIERTE
SACHGEBIETE (IPC)

A01B
G05D

Der vorliegende Recherchenbericht wurde für alle Patentansprüche erstellt

| Recherchenort | Abschlußdatum der Recherche | Prüfer |
|---|---|---|
| München | 21. November 2024 | Vedoato, Luca |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

.............................................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 24 18 7222

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-11-2024

| Im Recherchenbericht angeführtes Patentdokument | Datum der Veröffentlichung | Mitglied(er) der Patentfamilie | Datum der Veröffentlichung |
|---|---|---|---|
| US 11320279 B2 | 03-05-2022 | US 2020064144 A1<br>WO 2018101351 A1 | 27-02-2020<br>07-06-2018 |
| DE 102004027242 A1 | 22-12-2005 | AR 048889 A1<br>AR 076482 A2<br>BR PI0501987 A<br>DE 102004027242 A1<br>RU 2384987 C2<br>UA 93982 C2<br>US 2005273253 A1<br>US 2008195270 A1 | 07-06-2006<br>15-06-2011<br>24-01-2006<br>22-12-2005<br>27-03-2010<br>25-03-2011<br>08-12-2005<br>14-08-2008 |
| US 10368475 B2 | 06-08-2019 | US 2017300064 A1<br>US 2019289770 A1 | 19-10-2017<br>26-09-2019 |
| US 2014081568 A1 | 20-03-2014 | KEINE | |

EPO FORM P0461

Für nähere Einzelheiten zu diesem Anhang : siehe Amtsblatt des Europäischen Patentamts, Nr.12/82